# DEMANDE DE BREVET EUROPEEN

(11) **EP 0 870 739 A1**
(43) Date de publication de la demande: **14.10.1998**
(21) Numéro de dépôt: 98870068.8
(22) Date de dépôt: 03.04.1998
(51) Int. Cl.: C04B 14/20, C04B 28/10

(54) **Mortier pour la construction**

(30) Priorité: 07.04.1997 BE 9700314
(71) Demandeur: Demain, Pierre-Etienne, 5080 Rhisnes (La Bruyère) (BE)
(72) Inventeur: Demain, Pierre-Etienne, 5080 Rhisnes (La Bruyère) (BE)
(74) Mandataire: de Kemmeter, François

(57) **Abrégé**

L'invention concerne un mortier pour la construction et en particulier un mortier d'égalisation pour enduits intérieurs et extérieurs.

Ce mortier, essentiellement à base de chaux comporte une part prépondérante de vermiculite.

On obtient de cette manière un mortier applicable à la main ou la machine à projeter pour faire des enduits présentant une série de propriétés intéressantes.

## Description

La présente invention concerne un mortier à la chaux pour la construction et en particulier un mortier d'égalisation pour enduits intérieurs et extérieurs.

Il est connu d'utiliser comme ingrédients la chaux et le sable traditionnel auxquels on ajoute de l'eau pour faire des mortiers à la consistance désirée.

L'invention a pour objectif de procurer un mortier qui ne se fissure ni ne se faïence pendant ou après la pose tout en présentant encore d'autres propriétés intéressantes par rapport aux mortiers ordinaires.

A cet effet, par rapport aux produits similaires connus, la composition du mortier selon l'invention se caractérise par le fait que le liant est constitué soit par de la chaux hydraulique, soit par de la chaux aérienne combinée à une proportion mineure de chaux hydraulique ou de plâtre gros. La vermiculite, lors du mélange du mortier avec l'eau, se charge d'eau et la restitue lentement dans le mortier au cours de la prise et de la carbonatation de celui-ci, évitant ainsi des retraits dans la matière.

Il est bien connu que dans un mortier à la chaux, l'ajout d'eau sert à faciliter sa maniabilité et sa mise en oeuvre mécanique. La vermiculite exfoliée y ajoute l'intérêt de ses propriétés d'isolation thermique, acoustique et phonique et de résistance au feu (elle est incombustible) par rapport au sable traditionel. En remplaçant une part de vermiculite par une part d'anas de lin on apporte de par la texture de l'anas de lin, un accrochage mécanique complémentaire et supplémentaire pour certains supports, murs ou plafonds, douteux ou incertains. La granulométrie de la vermiculite employée dans les compositions est de 70% de grains, variant de 6 à 15 mm, et de 30% de grains, variant de 0,5 à 2,5 mm. Les grains les plus fins servent à obtenir en surface de préfinition une relative homogénéité, tout en assurant un bon accrochage mécanique à la couche de finition.
Selon que l'on souhaite un mortier de densité plus ou moins élevée, on remplace les grains de vermiculite les plus fins par des charges particulières d'une granulométrie oscillant entre 90 et 150 microns (A.F.A. 110) sans pour autant dépasser 30% du constituant vermiculite global.

D'autres caractéristiques de l'invention sont exposées dans les revendications subordonnées.

Ci-après sont donnés quelques exemples de réalisation à titre non limitatif. Dans ces exemples, les parts sont données en volume et non en poids.

### EXEMPLE 1

On mélange à sec les ingrédients suivants :
10 parts de vermiculite ;
6 parts de chaux aérienne ;
1 part de chaux hydraulique, et on y ajoute de l'eau jusqu'à consistance désirée.

### EXEMPLE 2

On mélange à sec les ingrédients suivants :
10 parts de vermiculite ;
5,5 parts de chaux hydraulique ;
et on y ajoute de l'eau jusqu'à consistance désirée.

### EXEMPLE 3

On mélange à sec les ingrédients suivants :
10 parts de vermiculite ;
5 parts de chaux aérienne ;
1 part de plâtre gros, et on y ajoute de l'eau jusqu'à consistance désirée.

### EXEMPLE 4

On procède comme dans l'un quelconque des exemples précédents sauf que l'on remplace chaque fois une part de vermiculite par une part d'anas de lin.

### EXEMPLE 5

On procède comme dans l'un quelconque des exemples précédents, sauf que l'on remplace au maximum 30% du constituant vermiculite par des charges particulières.

Le mortier d'égalisation pour enduits intérieurs ou extérieurs selon l'invention a des propriétés d'isolation thermique, phonique et acoustique de même qu'il est résistant au feu. Très souple, léger, de densité idéale, compatible avec la plupart des supports existants en construction, il ne faïence pas à la pose, reprend pour une bonne part les tassements et mouvements des bâtiments, accepte l'eau tout en étant perméable à la vapeur d'eau. Il reçoit tous les enduits de finition que l'on rencontre habituellement dans les bâtisses. De manutention aisée, il se compose de produits entièrement naturels et recyclables. Il est applicable manuellement ou à la machine à projeter. Il peut servir de protection incendie pour l'industrie, en remplacement de l'amiante nocive, en raison de ses propriétés ignifuges.

## Revendications

1. Composition prête à l'emploi pour un mortier d'égalisation pour enduits intérieurs ou extérieurs, comprenant, en volume, et à l'état sec et pulvérulent environ 10 parts de constituant à base de vermiculite pour environ 6 à 8 parts de constituant liant à base de chaux, caractérisée en ce que le liant est constitué soit par de la chaux hydraulique, soit par de la chaux aérienne combinée à une proportion mineure de chaux hydraulique ou de plâtre gros.

2. Composition suivant la revendication 1, caractérisée en ce que la proportion du constituant liant s'élève à 7 parts constituées de
6 parts de chaux aérienne, et
1 part de chaux hydraulique.

3. Composition suivant la revendication 1, caractérisée en ce que le constituant liant se compose de
5,5 parts de chaux hydraulique

4. Composition suivant la revenidcation 1, caractérisée en ce que le constituant liant se compose de
5 parts de chaux aérienne
1 part de plâtre gros

5. Composition suivant l'une quelconque des revendications 1 à 4, caractérisée en ce que le constituant vermiculite comprend uniquement de la vermiculite.

6. Composition suivant la revendication 5, caractérisée en ce que le constituant vermiculite comprend 7 parts de vermiculite et 3 parts de charges particulières.

7. Composition suivant la revendication 6, caractérisée en ce que la vermiculite est remplacée en partie par de l'anas de lin.

8. Composition suivant la revendication 7, caractérisée en ce qu'une part de vermiculite est remplacée par une part d'anas de lin.

9. Composition suivant la revendication 6, caractérisée en ce que la vermiculite est remplacée en partie mineure par du sable.

10. Composition suivant la revendication 9, caractérisée en ce que 3 parts de vermiculite sont remplacées par 3 parts de sable extra fin (90 à 130 microns).

11. Mortier obtenu par ajout d'eau jusqu'à consistance désirée à une composition telle que définie dans l'une quelconque des revendications 1 à 10.
